# FASCICULE DE BREVET EUROPEEN

(11) **EP 3 350 064 B1**
(45) Date de publication et mention de la délivrance du brevet: **14.07.2021**
(21) Numéro de dépôt: 16756688.4
(22) Date de dépôt: 24.08.2016
(51) Int. Cl.: B62D 25/08, B62D 29/04

(54) **STRUCTURE DE SUPPORT POUR UN MODULE DE FACE AVANT D'UN VEHICULE AUTOMOBILE ET MODULE DE FACE AVANT COMPRENANT LADITE STRUCTURE DE SUPPORT**
TRAGSTRUKTUR FÜR EIN FRONTENDMODUL EINES KRAFTFAHRZEUGS UND FRONTENDMODUL MIT DER TRÄGERSTRUKTUR
SUPPORTING STRUCTURE FOR A FRONT-END MODULE OF A MOTOR VEHICLE AND FRONT-END MODULE COMPRISING SAID SUPPORTING STRUCTURE

(30) Priorité: 14.09.2015 FR 1558570
(43) Date de publication de la demande: 25.07.2018
(73) Titulaire: Valeo Systemes Thermiques, 78320 Le Mesnil Saint Denis (FR)
(72) Inventeur: ANDRE, Stephan, 78340 Les Clayes-sous-Bois (FR); HERLEM, Jean-Paul, 78180 Montigny Le Bretonneux (FR)
(74) Mandataire: Tran, Chi-Hai
(86) Numéro de dépôt international: PCT/EP2016/069926
(87) Numéro de publication internationale: WO 2017/045878

(56) Documents cités:
- EP-A2- 2 394 886
- DE-A1-102006 046 817
- US-A1- 2011 011 661
- US-A1- 2014 062 140

## Description

### Domaine de l'invention

La présente invention concerne un module de face avant pour un véhicule automobile et, plus précisément, une structure de support adaptée pour ledit module de face avant.

### Etat de la technique

De manière générale, au sein d'un véhicule automobile, un module de face avant est un élément structurel destiné à contenir une pluralité de dispositifs nécessaires au fonctionnement du véhicule automobile, tels que des projecteurs ou échangeur(s) thermique(s). A l'issue de la production d'un module de face avant, celui-ci peut être directement assemblé sur le véhicule automobile, notamment avec des éléments du châssis du véhicule automobile, tels que les longerons.

Le module de face avant peut être également monté sur le véhicule automobile par assemblage avec un pare-chocs ou un bouclier frontal. De manière connue, le module de face avant comporte une structure de support destinée à recevoir les dispositifs nécessaires au fonctionnement du véhicule automobile et une poutre pare-chocs pour protéger lesdits dispositifs lors d'une collision frontale dudit véhicule automobile.

La structure de support du module de face avant comprend différentes pièces reliées ensemble. Ainsi, la structure de support comprend une traverse inférieure, des montants latéraux pour ladite traverse inférieure, une traverse supérieure adaptée pour être reliée au sommet des montants latéraux et des bras de renfort reliés aux extrémités de la traverse supérieure et/ou sur les montants latéraux. De manière générale, une telle structure de support est entièrement réalisée dans un matériau résistant tel qu'un matériau plastique adapté, afin d'être conforme aux normes imposées par la réglementation en matière de sécurité automobile lors d'une collision frontale entre un piéton et un véhicule automobile.

Le document US 2011/011661 A1 décrit une structure de support pour un module de face avant d'un véhicule automobile selon le préambule de la revendication 1.

De manière connue, la structure de support comprend également une serrure de capot (également dénommée « serrure du capot moteur ») afin de verrouiller le capot du compartiment moteur du véhicule automobile en position fermée. Cependant, lors d'une collision frontale, ou lors d'une tentative d'effraction, la serrure du capot moteur ne constitue pas toujours une protection suffisante. Par conséquent, dans l'art antérieur, il existe des solutions permettant de renforcer la serrure du capot moteur.

Une première solution consiste à renforcer la structure de support en ajoutant des renforts rectilignes entre la zone de serrure du capot moteur, située sur la traverse supérieure, et chaque montant latéral. Les renforts sont situés en partie avant de la structure de support, c'est-à-dire vers l'extérieur du véhicule automobile.

Une autre solution consiste à renforcer la structure de support en ajoutant une plaque de renfort permettant de relier la zone de serrure du capot moteur de la traverse supérieure à la poutre pare-chocs. La plaque de renfort est située du côté avant de la structure de support.

Il apparait que les solutions décrites ci-dessus manquent d'efficacité dans la mesure où, lors d'une collision frontale, les dispositifs situés au sein du module de face avant sont malgré tout impactés lors du choc et conduisent à une détérioration des renforts, qu'il s'agisse des renforts rectilignes ou de la plaque de renfort. Par conséquent, la résistance de la serrure du capot moteur n'est pas garantie, ce qui peut entrainer une ouverture intempestive du capot lors dudit choc frontal.

A la lumière de ce qui précède, il s'avère donc nécessaire d'améliorer la conception d'une structure de support d'un module de face avant selon l'état de la technique afin d'optimiser le fonctionnement du véhicule automobile, tout en respectant les normes relatives à la réglementation en matière de sécurité automobile.

### Exposé de l'invention

La structure de support du module de face avant et le module de face avant comprenant ladite structure de support selon la présente invention visent à remédier aux inconvénients mentionnés ci-dessus.

Ainsi, l'invention a pour objet une structure de support pour un module de face avant d'un véhicule automobile, ladite structure de support comprenant une traverse inférieure, un premier montant latéral, un deuxième montant latéral et une traverse supérieure, ladite structure de support consistant essentiellement en un matériau plastique, caractérisé en ce que la structure de support comprend un premier et un deuxième bras de support reçus dans le volume du matériau de la structure de support, le premier bras de support étant relié via sa première extrémité au premier montant latéral et via sa deuxième extrémité à la traverse supérieure, et le deuxième bras de support étant relié via sa première extrémité au deuxième montant latéral et via sa deuxième extrémité à la traverse supérieure.

De manière avantageuse, au moins une partie de chacun des premier et/ou deuxième bras de support est reçue dans un évidement ou une rainure agencé dans la structure de support.

De manière avantageuse, la structure de support comprend des nervures adaptées pour augmenter la rigidité de ladite structure de support, dans laquelle ledit évidement ou ladite rainure est défini(e) par l'espace existant entre deux nervures.

Selon un mode de réalisation de l'invention, lesdits premier et deuxième bras de support sont «encastrés » dans le réseau de nervures.

Selon l'invention, la traverse supérieure comprend une plaque de renfort, dans laquelle la deuxième extrémité du premier bras de support et la deuxième extrémité du deuxième bras de support sont reliées à ladite plaque de renfort.

De manière avantageuse, le premier et/ou le deuxième bras de support comprennent au moins une partie coudée.

De manière avantageuse, le premier et/ou le deuxième bras de support sont réalisés au moins en partie dans un matériau métallique ou un mélange de matériaux métalliques, de préférence consistent essentiellement en un matériau métallique ou un mélange de matériaux métalliques.

De manière avantageuse, le premier et/ou le deuxième bras de support sont chacun reliés au reste de la structure de support au moyen d'un élément de connexion, positionné au niveau de la connexion entre, respectivement, le premier montant latéral et la traverse supérieure, et le deuxième montant latéral et la traverse supérieure.

De manière avantageuse, la structure de support comprend en outre un élément de connexion agencé au niveau de la partie coudée.

De manière avantageuse, l'élément de connexion comprend un cache amovible.

De manière avantageuse, l'élément de connexion comprend une attache rivetée.

De manière avantageuse, la structure de support comprend une face avant et une face arrière, opposée à ladite face avant, ladite face arrière étant adaptée pour être positionnée en direction de l'habitacle du véhicule automobile, et dans laquelle le premier et le deuxième bras de support sont positionnés au niveau de ladite face arrière.

De manière avantageuse, le premier et le deuxième bras de support sont reliés l'un à l'autre.

L'invention a également pour objet un module de face avant pour véhicule automobile ayant une structure de support avec les caractéristiques mentionnées ci-dessus.

### Brève description des dessins

Les buts, objets et caractéristiques de la présente invention - ainsi que ses avantages - apparaîtront plus clairement à la lecture de la description qui suit, faite en référence aux dessins, dans lesquels :
- la figure 1 montre une vue en perspective de la face arrière d'une structure de support selon un premier mode de réalisation de l'invention,
- la figure 2 est une vue de face de la structure de support représentée en figure 1,
- la figure 3 représente un détail de la structure de support selon la figure 2,
- la figure 4 montre une vue en perspective de la structure de support selon un deuxième mode de réalisation de l'invention, cette structure de support comprenant des bras de support métalliques de structure différente,
- la figure 5 montre une vue de face de la structure de support représentée sur la figure 4,
- la figure 6 est une vue en perspective de la structure de support selon un troisième mode de réalisation de l'invention, comprenant des bras de support métalliques de structure différente,
- la figure 7 montre une vue de face de la structure de support représentée sur la figure 6,
- la figure 8 illustre, de manière schématique, l'engagement d'un bras de support métallique au sein de la structure de support.

### Description détaillée des modes de réalisation

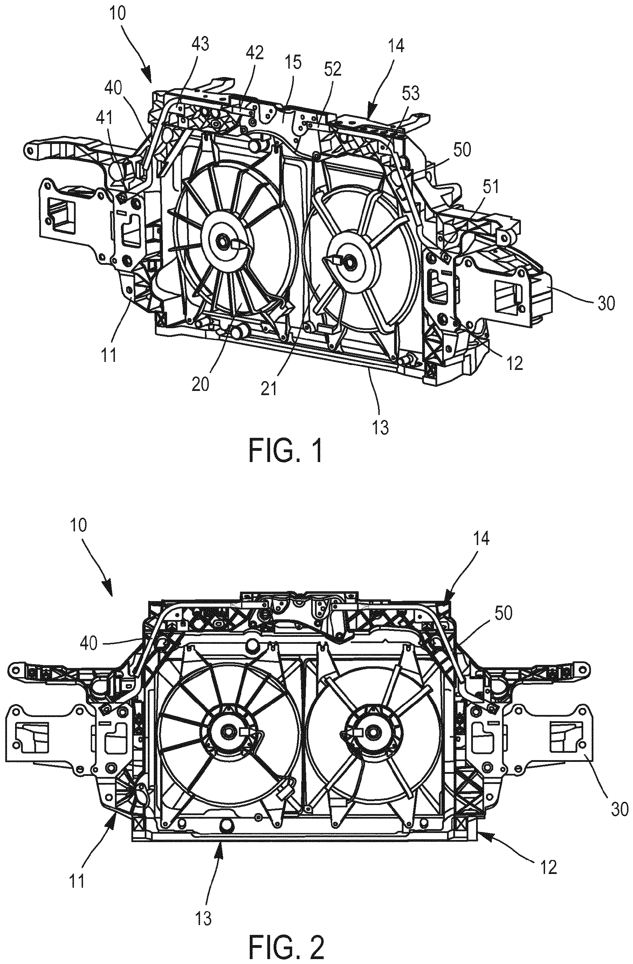

Tel qu'indiqué précédemment, la figure 1 est une vue en perspective de la face arrière d'une structure de support 10 selon un mode de réalisation de l'invention. La structure de support 10 comprend un premier montant 11, un deuxième montant 12, une traverse inférieure 13 et une traverse supérieure 14. Les montants 11, 12 et les traverses 13, 14 forment ensemble essentiellement une structure de support ayant la forme d'un cadre. Cette structure de support est adaptée pour recevoir plusieurs éléments tels qu'un radiateur (non visible), un condenseur (non visible) et des ventilateurs 20, 21. La face avant de la structure de support (non représentée) est adaptée pour être reliée à une poutre 30.

Plusieurs autres éléments, tels que des feux, peuvent être reliés sur la face avant de la structure du support. Les différents éléments reliés sur la structure de support 10 forment ensemble, et avec ladite structure de support, un module de face avant. Dans l'industrie automobile, il est connu d'utiliser le terme anglais « front end module » (FEM) pour définir ledit module de face avant. Le module de face avant est situé à l'arrière du pare-chocs avant et sous le capot du véhicule automobile. De manière générale, la traverse supérieure 14 comprend des éléments adaptés pour relier une serrure de capot sur cette traverse supérieure.

La structure de support 10 représentée sur la figure 1 comprend un matériau plastique choisi pour conférer une résistance suffisante à la structure de support 10, et ce afin d'être conforme aux normes imposées par la règlementation en matière de sécurité automobile lors d'une collision frontale ou lors d'une tentative d'effraction (la serrure du capot moteur ne constituant pas toujours une protection suffisante).

Toujours dans cette optique, la structure de support 10 comprend des renforts pour éviter la déformation de la traverse supérieure et permettre ainsi de renforcer la serrure du capot moteur. Un premier renfort est positionné au niveau de la traverse supérieure 14, laquelle est pourvue d'une plaque de renfort 15 pour améliorer la rigidité de cette traverse supérieure 14.

En outre, toujours en vue de renforcer la structure de support 10 selon l'invention, la structure de support 10 comprend un premier bras de support 40 et un deuxième bras de support 50. Le premier bras de support 40 comprend une première extrémité 41 reliée au premier montant 11 de la structure de support 10. La deuxième extrémité 42 du premier bras de support 40 est, quant à elle, reliée à la plaque de renfort 15 présente sur la traverse supérieure 14. De manière similaire, le deuxième bras de support 50 comprend une première extrémité 51, reliée au deuxième montant 12, et une deuxième extrémité 52, reliée à la plaque de renfort 15.

Cette liaison peut être réalisée par plusieurs moyens de connexion possibles tels par exemple, des vis et pas de vis, des boulons et écrous, des attaches rivetées, des caches amovibles ou encore par soudure.

Comme représenté sur la figure 1, les bras de support 40 et 50 comprennent chacun une première partie et une deuxième partie droites, reliées entre elles par une partie coudée. La partie coudée du premier bras de support 40 est reliée au reste de la structure de support 10 au moyen d'un élément de connexion 43, positionné au niveau de la connexion entre le premier montant 11 et la traverse supérieure 14. De manière similaire, la partie coudée du deuxième bras de support 50 est reliée au reste de la structure de support 10 au moyen d'un élément de connexion 53, positionné au niveau de la connexion entre le deuxième montant 12 et la traverse supérieure 14.

La figure 2 est une vue de face de la structure de support 10 représentée sur la figure 1. Les montants 11, 12 et les traverses 13, 14 comprennent un matériau plastique, voire consistent essentiellement en un matériau au plastique (ou consistent en un matériau plastique) choisi pour conférer une résistance suffisante à la structure de support 10, et ce afin d'être conforme aux normes imposées par la règlementation en matière de sécurité automobile lors d'une collision frontale ou lors d'une tentative d'infraction, tel qu'indiqué supra. La structure de support 10 comprend des nervures. Ces dernières permettent d'augmenter la rigidité de la structure de support 10 tout en conservant un volume et un poids relativement faibles. Selon l'invention, le premier bras 40 et le deuxième bras 50 sont reliés à la structure de support 10 en étant reçus dans le volume du matériau plastique de la structure de support 10. De plus, les premier et deuxième bras 40, 50 sont encastrés dans le réseau de nervures de la structure de support 10, évitant ainsi le déploiement des bras de support 40, 50 en cas d'impact.

Un premier avantage de la solution technique illustrée sur les figures 1 et 2 est inhérent au fait que les bras de support 40, 50 sont reliés au reste de structure de support 10 sans nécessiter de processus de surmoulage. Ainsi, la structure de support 10 peut être obtenue sans nécessiter d'intervention sur l'outil/les outils de production des structures de support, telle que la structure de support 10 selon l'invention. Le fait que les bras de support 40, 50 soient reliés à l'extérieur du matériau plastique constituant la structure de support permet la calibration et une mise au point (avantageusement les deux) relativement aisée(s) de la connexion entre la structure de support 10 et les bras de support 40, 50. En outre, en cas de besoin, les bras de support 40, 50 peuvent être séparés du matériau plastique constituant (voire constituant essentiellement) les montants 11, 12 et les traverses 13, 14. Cela représente un avantage conséquent durant une réparation et/ou le recyclage de la structure de support 10.

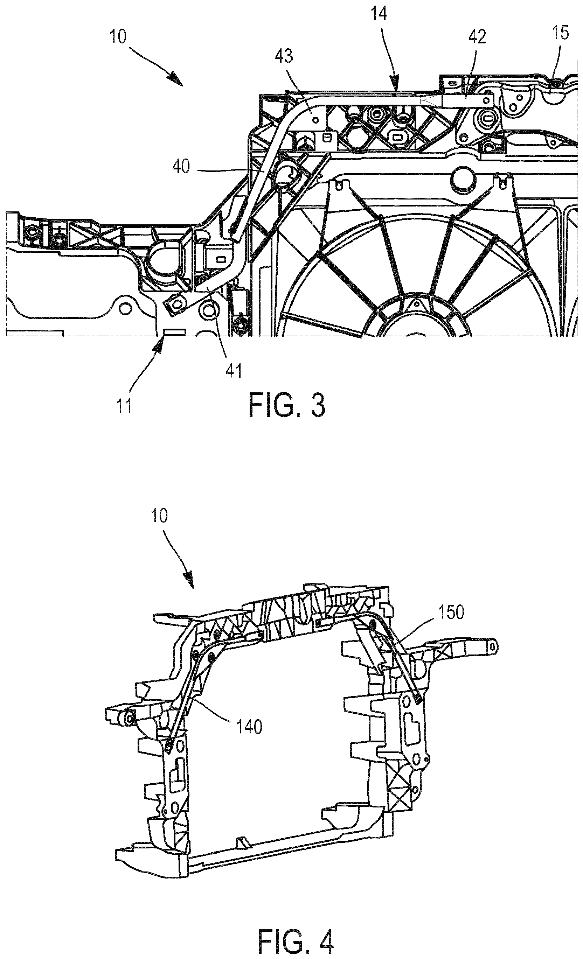

La figure 3 est une vue agrandie d'une partie de la structure de support 10 représentée sur les figures 1 et 2. Sur cette figure 3, seul le premier bras de support 40 est visible avec ses trois points de connexion pour relier le bras de support 40 à la structure de support 10, la première extrémité 41 du bras de support 40 étant reliée au premier montant 11, la partie coudée étant reliée à l'aide d'un élément de connexion 43 et la deuxième extrémité 42 du bras de support 40 étant reliée à la plaque de renfort 15. Sur cette figure 3, les différentes nervures encadrant le bras de support 40 sont clairement visibles. A titre d'exemple, l'élément de connexion 43, 53 comprennent un cache amovible ou encore une attache rivetée.

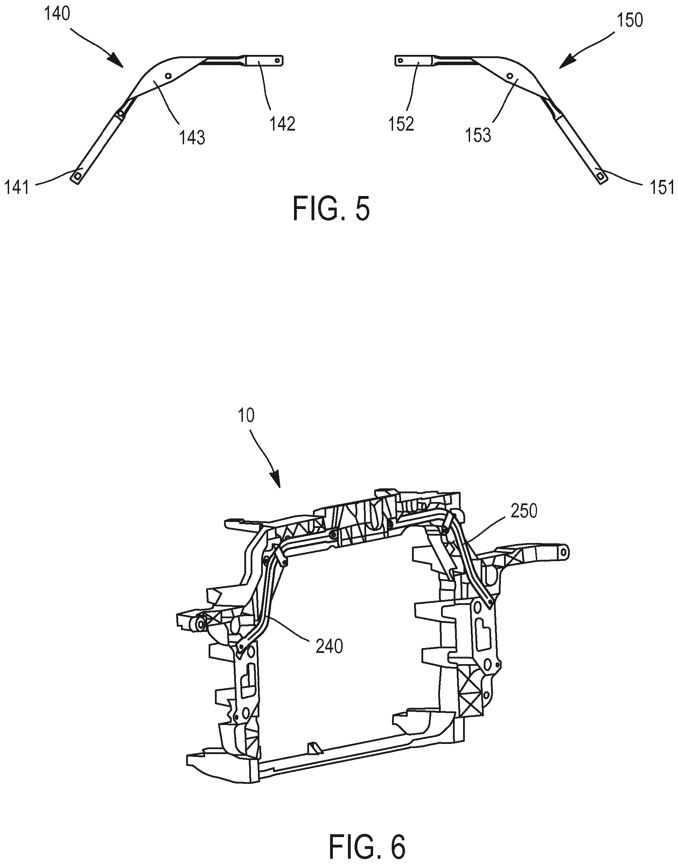

Les figures 4 et 5 illustrent une structure de support 10 selon un deuxième mode de réalisation de l'invention, à savoir possédant des bras de support 140 et 150 de structure différente. En effet, comme montré en figure 5, le bras de support 140 comprend une première extrémité 141 et une deuxième extrémité 142, reliées entre elles par le biais d'un élément intermédiaire, consistant en un élément métallique plat 143, plié pour obtenir une partie coudée. De manière analogue, le bras de support 150 comprend une première et une deuxième extrémités 151 et 152 reliées entre elles par le biais d'un élément métallique plat 153.

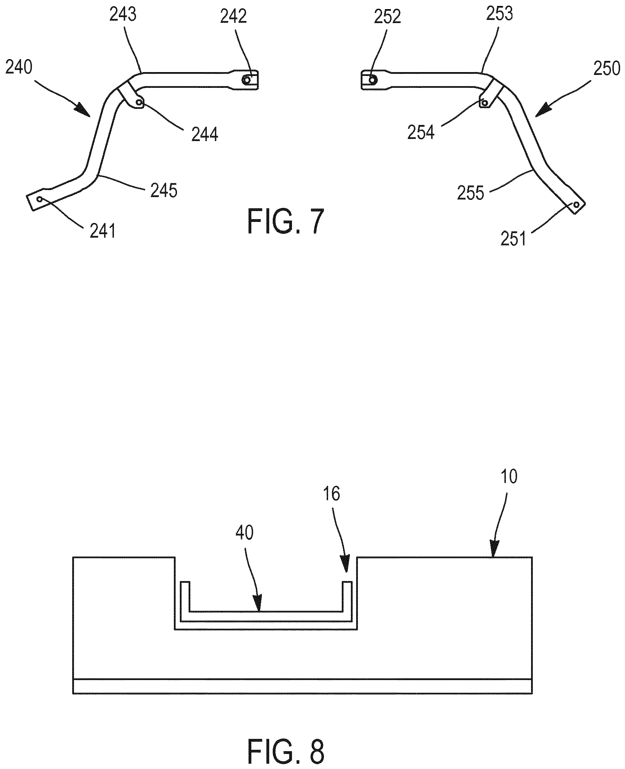

Les figures 6 et 7 illustrent, quant à elles, une structure de support 10 selon un troisième mode de réalisation. Comme représenté sur la figure 7, le bras de support 240 comprend une première extrémité 241 qui s'étend essentiellement dans une première direction lorsque ledit bras de support 240 est relié au reste de ladite structure de support 10. La deuxième extrémité 242 est positionnée essentiellement horizontalement, toujours lorsque ledit bras de support 240 est relié au reste de ladite structure de support 10. Entre la première extrémité 241 et la deuxième extrémité 242, se trouve une première partie coudée 243 comprenant un élément de connexion 244 pour relier la partie coudée 243 sur la structure de support 10. De plus, le bras de support 240 comprend une deuxième partie coudée 245, coudée de sorte que la susdite première direction, dans laquelle s'étend essentiellement la première extrémité 241 lorsque ledit bras de support 240 est relié au reste de ladite structure de support 10, ne soit pas parallèle à la direction dans laquelle s'étend la deuxième extrémité 242, à savoir ne soit pas positionnée essentiellement horizontalement lorsque ledit bras de support 240 est relié au reste de ladite structure de support 10. En d'autres termes, l'angle formant le coude de la première partie coudée 243 est différent de celui formant le coude de la deuxième partie coudée 245. Plus précisément, selon le mode de réalisation représenté en figure 7, l'angle formant le coude de la première partie coudée 243 est plus aigu que l'angle formant le coude de la deuxième partie coudée 245. Selon un mode de réalisation non illustré, la deuxième partie coudée 245 comprend également un élément de connexion.

Comme illustré en figure 7, le deuxième bras de support 250 est structurellement identique au premier bras de support 240. Dans un souci de concision, la description faite ci-dessus des différentes parties du premier bras de support 240 s'applique donc *mutatis mutandis* aux parties correspondantes du deuxième bras de support 250, lesquelles sont logiquement numérotées 251-255.

La figure 8 montre, de manière schématique, le principe de blocage d'un bras de support 40 (tel que représenté sur les figures 1 à 3) dans le réseau de nervures de la structure de support 10. Dans le matériau formant la structure de support 10, une rainure 16 est présente, définie par l'espace existant entre deux nervures (non numérotées). Cette rainure 16 est adaptée pour recevoir, en son sein, le bras de support 40. Ledit bras de support 40, comprenant une partie coudée, ne peut se déplier sans entrer en butée avec les parois de chacune des deux nervures susmentionnées, présentes dans le matériau constituant la structure de support 10, lesdites nervure jouant, par conséquent, le rôle de butée. De cette manière, le matériau généralement métallique constituant le bras de support 40 est bloqué à l'intérieur de la rainure 16 et ne peut sortir de cette rainure 16, permettant ainsi de conserver la forme du bras de support 40 même si une certaine force est exercée sur le bras de support 40.

Selon un mode de réalisation non illustré, le premier 40, 140, 240 et le deuxième bras de support 50, 150, 250 peuvent être reliés l'un à l'autre.

## Revendications

1. Structure de support (10) pour un module de face avant d'un véhicule automobile, ladite structure de support comprenant une traverse inférieure (13), un premier montant latéral (11), un deuxième montant latéral (12) et une traverse supérieure (14), la structure de support (10) comprenant un premier (40, 140, 240) et un deuxième (50, 150, 250) bras de support reçus au sein de la structure de support (10), le premier bras de support (40, 140, 240) étant relié via sa première extrémité (41, 141, 241) au premier montant latéral (11) et via sa deuxième extrémité (42, 142, 242) à la traverse supérieure (14), et le deuxième bras de support (50, 150, 250) étant relié via sa première extrémité (51, 151, 251) au deuxième montant latéral (12) et via sa deuxième extrémité (52, 152, 252) à la traverse supérieure (14), **caractérisée en ce que** la traverse supérieure (14) comprend une plaque de renfort (15), la deuxième extrémité du premier bras de support (42, 142, 242) et la deuxième extrémité du deuxième bras de support (52, 152, 252) étant reliées à ladite plaque de renfort (15).

2. Structure de support (10) selon la revendication 1, dans laquelle au moins une partie de chacun des premier (40, 140, 240) et/ou deuxième (50, 150, 250) bras de support est reçue dans un évidement ou une rainure (16) agencé dans la structure de support (10).

3. Structure de support (10) selon la revendication 2, ladite structure de support (10) comprenant des nervures, dans laquelle ledit évidement ou ladite rainure (16) est défini(e) par l'espace existant entre deux nervures.

4. Structure de support (10) selon l'une des revendications 1 à 3, dans laquelle le premier (40, 140, 240) et/ou le deuxième (50, 150, 250) bras de support comprennent au moins une partie coudée (43, 143, 243).

5. Structure de support (10) selon l'une des revendications 1 à 4, dans laquelle le premier (40, 140, 240) et/ou le deuxième (50, 150, 250) bras de support sont réalisés au moins en partie dans un matériau métallique ou un mélange de matériaux métalliques.

6. Structure de support (10) selon l'une des revendications 1 à 5, dans laquelle le premier (40, 140, 240) et/ou le deuxième (50, 150, 250) bras de support sont chacun reliés au reste de la structure de support au moyen d'un élément de connexion (43, 53).

7. Structure de support (10) selon la revendication 6 dépendante des revendications 5 ou 6, dans laquelle la structure de support comprend en outre un élément de connexion (43, 53) agencé au niveau de la partie coudée (43, 143, 243).

8. Structure de support (10) selon l'une des revendications 6 ou 7, l'élément de connexion (43, 53) comprenant un cache amovible.

9. Structure de support (10) selon l'une des revendications 6 à 8, l'élément de connexion (43, 53) comprenant une attache rivetée.

10. Structure de support (10) selon l'une des revendications 1 à 9, dans laquelle la structure de support (10) comprend une face avant et une face arrière, opposée à ladite face avant, ladite face arrière étant adaptée pour être positionnée en direction de l'habitacle du véhicule automobile, et/ou dans laquelle le premier (40, 140, 240) et le deuxième (50, 150, 250) bras de support sont positionnés au niveau de ladite face arrière.

11. Structure de support (10) selon l'une des revendications 1 à 10, dans laquelle le premier (40, 140, 240) et le deuxième (50, 150, 250) bras de support sont reliés l'un à l'autre.

12. Module de face avant comprenant une structure de support (10) selon l'une des revendications précédentes.

## Patentansprüche

1. Haltestruktur (10) für ein Frontendmodul eines Kraftfahrzeugs, wobei die Haltestruktur eine untere Traverse (13), einen ersten Seitenpfosten (11), einen zweiten Seitenpfosten (12) und eine obere Traverse (14) umfasst, wobei die Haltestruktur (10) einen ersten (40, 140, 240) und einen zweiten (50, 150, 250) Haltearm umfasst, die innerhalb der Haltestruktur (10) aufgenommen sind, wobei der erste Haltearm (40, 140, 240) über sein erstes Ende (41, 141, 241) mit dem ersten Seitenpfosten (11) und über sein zweites Ende (42, 142, 242) mit der oberen Traverse (14) und der zweite Haltearm (50, 150, 250) über sein erstes Ende (51, 151, 251) mit dem zweiten Seitenpfosten (12) und über sein zweites Ende (52, 152, 252) mit der oberen Traverse (14) verbunden ist, **dadurch gekennzeichnet, dass** die obere Traverse (14) eine Verstärkungsplatte (15) umfasst, wobei das zweite Ende des ersten Haltearms (42, 142, 242) und das zweite Ende des zweiten Haltearms (52, 152, 252) mit der Verstärkungsplatte (15) verbunden sind.

2. Haltestruktur (10) nach Anspruch 1, wobei wenigstens ein Abschnitt jedes vom ersten (40, 140, 240) und/oder zweiten (50, 150, 250) Haltearm in einer Ausnehmung oder einer Rille (16) aufgenommen ist, die in der Haltestruktur (10) angeordnet ist.

3. Haltestruktur (10) nach Anspruch 2, wobei die Haltestruktur (10) Rippen umfasst, wobei die Ausnehmung oder die Rille (16) von dem Raum definiert ist, der zwischen zwei Rippen vorhanden ist.

4. Haltestruktur (10) nach einem der Ansprüche 1 bis 3, wobei der erste (40, 140, 240) und/oder zweite (50, 150, 250) Haltearm wenigstens einen gebogenen Abschnitt (43, 143, 243) umfassen.

5. Haltestruktur (10) nach einem der Ansprüche 1 bis 4, wobei der erste (40, 140, 240) und/oder zweite (50, 150, 250) Haltearm wenigstens teilweise aus einem Metallmaterial oder einem Gemisch von Metallmaterialien hergestellt sind.

6. Haltestruktur (10) nach einem der Ansprüche 1 bis 5, wobei der erste (40, 140, 240) und/oder zweite Haltearm (50, 150, 250) jeweils mittels eines Verbindungselements (43, 53) mit der übrigen Haltestruktur verbunden sind.

7. Haltestruktur (10) nach Anspruch 6 in Abhängigkeit von den Ansprüchen 4 oder 5, wobei die Haltestruktur ferner ein Verbindungselement (43, 53) umfasst, das am gebogenen Abschnitt (43, 143, 243) angeordnet ist.

8. Haltestruktur (10) nach einem der Ansprüche 6 oder 7, wobei das Verbindungselement (43, 53) eine abnehmbare Abdeckung umfasst.

9. Haltestruktur (10) nach einem der Ansprüche 6 bis 8, wobei das Verbindungselement (43, 53) ein vernietetes Befestigungsmittel umfasst.

10. Haltestruktur (10) nach einem der Ansprüche 1 bis 9, wobei die Haltestruktur (10) eine Vorderseite und eine Rückseite, die der Vorderseite gegenüber liegt, umfasst, wobei die Rückseite geeignet ist, in Richtung des Fahrgastraums des Kraftfahrzeugs positioniert zu sein, und/oder wobei der erste (40, 140, 240) und der zweite (50, 150, 250) Haltearm an der Rückseite positioniert sind.

11. Haltestruktur (10) nach einem der Ansprüche 1 bis 10, wobei der erste (40, 140, 240) und der zweite (50, 150, 250) Haltearm miteinander verbunden sind.

12. Frontendmodul umfassend eine Haltestruktur (10) nach einem der vorhergehenden Ansprüche.

## Claims

1. Support structure (10) for a front face module of a motor vehicle, said support structure comprising a lower crossmember (13), a first lateral upright (11), a second lateral upright (12) and an upper crossmember (14), the support structure (10) comprising a first support arm (40, 140, 240) and a second support arm (50, 150, 250), these support arms being received within the support structure (10), the first support arm (40, 140, 240) being connected via its first end (41, 141, 241) to the first lateral upright (11), and via its second end (42, 142, 242) to the upper crossmember (14), and the second support arm (50, 150, 250) being connected via its first end (51, 151, 251) to the second lateral upright (12), and via its second end (52, 152, 252) to the upper crossmember (14), **characterized in that** the upper crossmember (14) comprises a reinforcing plate (15), the second end of the first support arm (42, 142, 242) and the second end of the second support arm (52, 152, 252) being connected to said reinforcing plate (15).

2. Support structure (10) according to Claim 1, wherein at least part of each of the first support arm (40, 140, 240) and/or second support arm (50, 150, 250) is received in a recess or a groove (16) arranged in the support structure (10).

3. Support structure (10) according to Claim 2, said support structure (10) comprising ribs, wherein said recess or said groove (16) is defined by the space existing between two ribs.

4. Support structure (10) according to one of Claims 1 to 3, wherein the first support arm (40, 140, 240) and/or the second support arm (50, 150, 250) comprise at least one bent portion (43, 143, 243).

5. Support structure (10) according to one of Claims 1 to 4, wherein the first support arm (40, 140, 240) and/or the second support arm (50, 150, 250) are made, at least in part, of a metallic material or a mixture of metallic materials.

6. Support structure (10) according to one of Claims 1 to 5, wherein the first support arm (40, 140, 240) and/or the second support arm (50, 150, 250) are each connected to the rest of the support structure by means of a connection element (43, 53).

7. Support structure (10) according to Claim 6, dependent on Claims 4 or 5, wherein the support structure further comprises a connection element (43, 53) arranged at the bent portion (43, 143, 243).

8. Support structure (10) according to either one of Claims 6 and 7, the connection element (43, 53) comprising a removable cover plate.

9. Support structure (10) according to one of Claims 6 to 8, the connection element (43, 53) comprising a riveted attachment.

10. Support structure (10) according to one of Claims 1 to 9, wherein the support structure (10) comprises a front face and a rear face opposite said front face, said rear face being designed to be positioned towards the passenger compartment of the motor vehicle, and/or wherein the first support arm (40, 140, 240) and the second support arm (50, 150, 250) are positioned at said rear face.

11. Support structure (10) according to one of Claims 1 to 10, wherein the first support arm (40, 140, 240) and the second support arm (50, 150, 250) are connected to one another.

12. Front face module comprising a support structure (10) according to one of the preceding claims.
